# EUROPÄISCHE PATENTSCHRIFT

(11) **EP 2 119 647 B1**
(45) Veröffentlichungstag und Bekanntmachung des Hinweises auf die Patenterteilung: **05.09.2012**
(21) Anmeldenummer: 09158593.5
(22) Anmeldetag: 23.04.2009
(51) Int. Cl.: B65G 47/248, B65G 49/08, F27B 9/24

(54) **Fördersystem und Verfahren zum Fördern von Formlingsträgern**
Conveying system and method for conveying blank holders
Système de transport et procédé de transport de supports de pièces brutes

(30) Priorität: 13.05.2008 DE 102008023323
(43) Veröffentlichungstag der Anmeldung: 18.11.2009
(73) Patentinhaber: Hans Lingl Anlagenbau und Verfahrenstechnik GmbH & Co. KG, 86381 Krumbach (DE)
(72) Erfinder: Laub, Manfred, 89250 Senden (DE); Göppel, Otto, 86498 Kettershausen (DE); Simon Helmut, 86381 Krumbach (DE)
(74) Vertreter: Körber, Wolfhart

(56) Entgegenhaltungen:
- EP-A- 0 828 129
- WO-A-2007/073182
- DE-A1- 2 039 116
- DE-A1- 10 153 381
- DE-C- 902 234
- JP-A- 11 011 645
- JP-A- 63 161 223
- US-A- 1 674 620

## Beschreibung

Die Erfindung betrifft ein Fördersystem nach dem Oberbegriff des Anspruchs 1 und ein Verfahren nach dem Oberbegriff des Anspruchs 8 zum Fördern von Formlingsträgern für Formlinge, die insbesondere aus einem keramischen oder ähnlichen Material bestehen, zum Beispiel Bausteine, Mauerziegeln oder Dachziegeln.

Solche Formlinge werden im Laufe ihrer Produktion auf Formlingsträgern transportiert, bei denen es sich um U- oder H-förmige Träger mit seitlichen Füßen handeln kann, die unterseitig auf einem Förderelement des Förderers aufliegen und oberseitig wenigstens einen Formling tragen. Da die Formlinge bei ihrer Herstellung auch einem Trocknungsprozess und/oder Brennprozess unterzogen werden, bestehen auch die Formlingsträger wenigstens in den Fällen, in denen sie zum Brennen der Formlinge benutzt werden, aus feuerfestem Material, zum Beispiel aus tonhaltigem Material. Dieses Material eignet sich aus wärmetechnischen Gründen besonders gut, ist aber auch verhältnismäßig spröde und brüchig. In der Praxis werden solche Formlingsträger, die zum Brennen von Formlingen benutzt werden, mit dem Fachwort Kassetten bezeichnet.

Eine in der Praxis übliche Form für Formlingsträger ist eine bereits erwähnte Form, die - in der Förderrichtung gesehen - einem H entspricht. Die oberseitig und unterseitig etwa vertikal abstehenden Ansätze der H-Form bilden jeweils in der unterseitigen Position seitliche Füße, auf denen die Formlingsträger beim Transport auf dem zugehörigen Transportelement stehen. In der Förderrichtung können die seitlichen Ansätze durchgehend ausgebildet sein, wodurch sich eine Doppel-U-Form ergibt, oder es können auf jeder Seite wenigstens zwei Ansätze vorgesehen sein, die einen in der Förderrichtung gerichteten Abstand voneinander aufweisen, wodurch sich - sowohl in der Förderrichtung als auch quer dazu gesehen - eine H-Form ergibt.

Bekannte Förderer der vorliegenden Art sind umlaufende Förderbänder mit einem Obertrum und einem Untertrum, wobei das Tragband endseitig Umlenkrollen umläuft, von denen eine durch einen Antrieb, zum Beispiel einen Elektromotor, angetrieben wird. Bei einem solchen Förderband bildet das Tragband ein Förderelement für wenigstens einen Formlingsträger, wobei das Obertrum eine Mehrzahl hintereinander angeordneter Förderelemente bilden kann, auf denen eine Mehrzahl Formlingsträger in sogenannter Kolonnenförderung förderbar sind.

Bei bekannten Förderern der vorbeschriebenen Art entspricht die Breite des wenigstens einen Förderelements etwa der Breite der einander gleichen Formlingsträger. Hierdurch ist zwar eine große und stabile Trag- bzw. Auflagefläche vorgegeben, jedoch sind weitere Handhabungen der Formlingsträger im Bereich des Förderers erschwert und raumaufwändig. Der Nachteil gilt sowohl für das vorbekannte Fördersystem als auch für das vorbekannte Verfahren zum Fördern von Formlingsträgern.

In US 1674620 ist ein gattungsgemäβes Ziegelforderband beschrieben, welches die Ziegel (Formlinge) auf tragbaren Formlingsträgern befördert. Das Förderband allein besteht aus zwei Förderelementen in Form zweier beabstandeter über hintereinander angeordnete Rollen gleitende Drahtseile. Dabei können mehrere übereinandergestapelte Formlinge enthaltende Formlingsträger gleichzeitig befördert werden. Die Formlingsträger haben seitliche Ausnehmungen um ein manuelles Abheben des (u.U. gestapelten) Formlingsträgers zu ermöglichen bzw. zu erleichtern.

In JP 11011645 A ist eine Abfallflaschenentladevorrichtung beschrieben welche unterseitig zwei Ladeförderer und oberseitig einen Entladeförderer aufweist und welche innerhalb eines rotierbaren Rahmens rotierbar angeordnet sind. Die Vorrichtung weist ferner zwei seitlich angeordnete Haltevorrichtungen auf, durch die bei einer Rotation des Rahmens der auf dem unteren Förderer befindlichen Flaschencontainer seitlich fixiert werden kann.

Der Erfindung liegt unter anderem die Aufgabe zugrunde, einen Förder system nach dem

Oberbegriff des Anspruchs 1 und ein Verfahren nach dem Oberbegriff des Anspruchs 7 raumgünstig auszugestalten und zwar so, dass die Formlingsträger raumgünstiger gefördert werden können.

Diese Aufgabe wird durch die Merkmale des Anspruchs 1 und 8 gelöst.Vorteilhafte Weiterbildungen der Erfindung sind in zugehörigen Unteransprüchen beschrieben.

Beim erfindungsgemäßen Fördersystem ist die Breite der Oberseite des Förderelements gleich oder kleiner als der Querabstand zwischen den Füßen, wobei seitlich vom Förderelement Freiräume für die Füße vorgesehen sind. Hierdurch überragt der Formlingsträger das Förderelement beidseitig, wobei das Förderelement oder auch der gesamte Förderer nicht nur schmaler ausgebildet werden kann, sondern es steht auch in beiden seitlichen Überstandsbereichen ein Freiraum zur Verfügung, der Freiraum sein kann oder in dem Teile des Förderers angeordnet werden können. Zum Beispiel können in den beiden seitlichen Überstandsbereichen unterhalb des Formlingsträgers Teile des Förderers oder Teile zum Heben und/oder Senken des Formlingsträgers angeordnet sein, zum Beispiel Hubteile einer Stapel- und/oder Entstapelvorrichtung für Formlingsträger.

Das erfindungsgemäße Förder system dient zum Fördern von Formlingsträgern mit Förderelementen, wobei die Formlingsträger seitlich angeordnete Füße und dazwischen einen nach oben versetzten Unterseitenbereich aufweisen, bei dem die Formlingsträger auf die Förderelemente übergeben und von diesen beim Fördern getragen werden. Die Formlingsträger werden von den Förderelementen in ihrem mittleren Unterseitenbereich getragen, wobei die Breite der Oberseite der Förderelemente gleich oder kleiner ist als der Unterseitenbereich. Das wesentliche erfinderische Merkmal besteht darin, dass zwischen zwei Förderern ein Zwischenförderer angeordnet ist und die Formlingsträger vom Zwischenförderer unter den Füßen getragen werden.

Beim erfindungsgemäßen Verfahren nach Anspruch 8 ist zwischen zwei Förderern ebenfalls ein Zwischenförderer angeordnet, wobei die Formlingsträger von den

Förderelementen in einem mittleren Unterseitenbereich zwischen den Füßen getragen werden.

Die vorbeschriebenen Vorteile der Ausgestaltung gemäß dem Anspruch 1 gelten auch für dieses Verfahren. Es werden nämlich die Formlingsträger in einem verhältnismäßig schmalen mittleren Bereich getragen, wobei seitlich neben dem Förderer auf beiden Seiten Freiräume für andere auf die Formlingsträger wirksame Manipulationsmaßnahmen zur Verfügung stehen, zum Beispiel für ein Heben und/oder Senken des Formlingsträgers im Bereich einer Hebe- und/oder Senkvorrichtung, zum Beispiel zum Zweck des Stapelns und/oder Entstapelns der Formlingsträger.

Zur Aufnahme der Formlinge weist der Formlingsträger eine Oberseitenkontur auf, die in besonderer Weise an regelmäßige Formen oder unregelmäßige Formen der aufzunehmenden Formlinge angepasst ist, um eine gute Positionierung des Formlings im Formlingsträger zu gewährleisten. Dies gilt nicht nur für eine richtige Höhenlage des Formlings, sondern auch für eine richtige Positionierung des Formlings in der Horizontalen. In der Praxis besteht jedoch die Schwierigkeit, dass in den Formlingsträger gelangende Verunreinigungen, zum Beispiel Abrieb oder Abbröckelungen der Formlinge oder des Formlingsträgers, auf die Auflageflächen im Formlingsträger gelangen und dort eine genaue Positionierung des Formlings beeinträchtigen, die jedoch insbesondere beim Be- und Entladen des Formlings in beziehungsweise aus dem Formlingsträger erwünscht ist, um die Gefahr von Fehlgriffen zu beseitigen oder zumindest zu vermindern.

Zur Verhinderung einer solchen Beeinträchtigung ist bereits vorgeschlagen worden , im Bereich des Förderers eine Greif- und Schwenkvorrichtung vorzusehen, mit der der Formlingsträger ergriffen, angehoben, quer über einen neben den Förderer angeordneten Abförderer bewegt und soweit um eine quer zur Förderrichtung verlaufende Schwenkachse geschwenkt wird, dass im Formlingsträger befindliche Verunreinigungen aufgrund der Schwerkraft aus dem Formlingsträger auf den Abförderer fallen und abtransportiert werden.

Der Förderer weist weiterhin eine Haltevorrichtung zum Halten des wenigstens einen Formlingsträgers an der Aufnahmestelle auf, wobei der Förderer mit der Haltevorrichtung um eine sich längs der Förderrichtung erstreckende Schwenkachse schwenkbar gelagert und z.B. rückschwenkbar oder drehbar angeordnet ist. Hierdurch ist es möglich, den Formlingsträger ohne ihn vom Förderer zu entfernen in eine Stellung zu schwenken bzw. zu wenden, in der im Formlingsträger befindliche Fremd- oder Schmutzteile aufgrund der Schwerkraft aus dem Formlingsträger fallen, zum Beispiel nach dem Schwenken um einen Schwenkwinkel von wenigstens etwa 90°, vorzugsweise noch mehr, zum Beispiel um etwa 180°. Aus dieser EntleerungsStellung kann der Förderer wieder zurück oder in die gleiche Schwenkbeziehungsweise Drehrichtung in seine Ausgangstellung geschwenkt werden.

Es ist zur Vereinfachung des Förderers möglich, am Förderer bezüglich der Schwenkachse einander gegenüberliegend angeordnete Haltevorrichtungen vorzusehen. Bei einer solchen Ausgestaltung erfolgt beim Wegschwenken des einen Formlingsträger von seiner Ausgangsstellung gleichzeitig ein Hinschwenken des gegenüberliegend gehaltenen Formlingsträgers zur Ausgangsstellung. Diese Bewegungen lassen sich durch ein Hin- und Herschwenken oder durch eine Drehung des Förderers um eine Längsachse erreichen, die vorzugsweise mittig angeordnet ist.

Um die Halterung und Anpassung des wenigstens einen Halterelements an die Formlingsträger zu verbessern, ist es vorteilhaft, eine Haltevorrichtung anzuordnen, die elastisch auf den Formlingsträger einwirkt, so dass unterschiedliche Abmessungen, z. B. Toleranzen, das Formlingsträgers die Halterung nicht beeinträchtigen.

Als Förderer eignet sich auch bei diesem Ausführungsbeispiel ein Bandförderer mit einem um endseitig angeordneten Umlenkrollen umlaufenden Tragband vorzugsweise. Dabei kann dem Förderer oder einem vor- oder nachgeordneten Förderer ein Antriebsmotor zum Drehen wenigstens einer Umlenkrolle vorgesehen sein. Es eignen sich aber auch andere Arten von Förderern.

Die Haltevorrichtung ist vorzugweise durch eine Klemmvorrichtung zum Klemmen des Formlingsträgers auf einem zugehörigen Transportelement gebildet, das durch das umlaufende Tragband gebildet ist.

Im Anspruch 1 sind Merkmale enthalten, die das Förder system bezüglich einer raumgünstigen Ausgestaltung verbessern und sich auch auf einen Zwischenförderer beziehen, der zwischen dem Förderer und einem Zu- oder Abförderer angeordnet ist. Weitere Merkmale beziehen sich auf eine Richtvorrichtung zum Ausrichten des Formlingsträgers auf den Förderer und auf eine Vorrichtung zum Heben des Formlingsträgers, die in den Förderer integriert sind.

Nachfolgend werden vorteilhafte Ausgestaltungen der Erfindung anhand mehrerer Zeichnungsfiguren näher beschrieben. Es zeigt:
Fig. 1 ein Förde system mit einem bzw. mehreren Förderern ohne Gestell, z.B. zum Fördern von Formlingsträgern in der Seitenansicht;
Fig. 2 das Förder system in der Draufsicht;
Fig. 3 den vertikalen Querschnitt III-III durch einen Förderer, z.B. durch einen Zuförderer oder Abförderer in Fig. 1, z.B. mit einem Gestell;
Fig. 4 die in Fig. 1 mit X gekennzeichnet Einzelheit eines Förderers, z.B. des Zuförderers oder des Abförderers, in vergrößerter Darstellung;
Fig. 5 den Querschnitt V-V in Fig. 4;

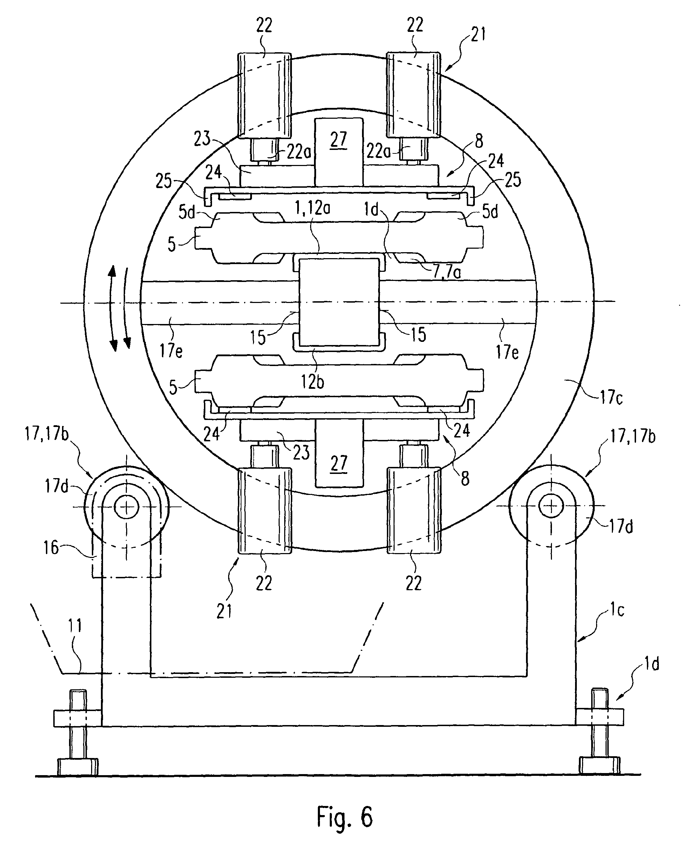

Fig. 6 den Querschnitt eines Förderers, insbesondere eines Förderers mit Entleerungsfunktion für das Fordergut, z.B. Formlingsträger, in vergrößerter Darstellung;
Fig. 7 einen Halter einer Haltevorrichtung zum Halten des Forderguts, insbesondere von Formlingsträgern, auf dem Förderer in der Draufsicht.

Die Erfindung umfasst mehrere Erfindungsaspekte, die an einer Fördereinrichtung mit mehreren Förderern 1, 2 und 4 verwirklicht sind.

Ein in seiner Gesamtheit mit 1 bezeichneter Förderer ist Teil des erfindungsgemäßem Förder systems im Sinne einer Förderstrecke, bestehend aus einem z.B. Zuförderer 2, und einem z.B. Weitererförderer 4, der die Formlinge vom z.B. Förderer 1 weiterfördert. Im Rahmen der Erfindung braucht jeweils nur einer der Förderer 1, 2, 4. ausgebildet zu sein.

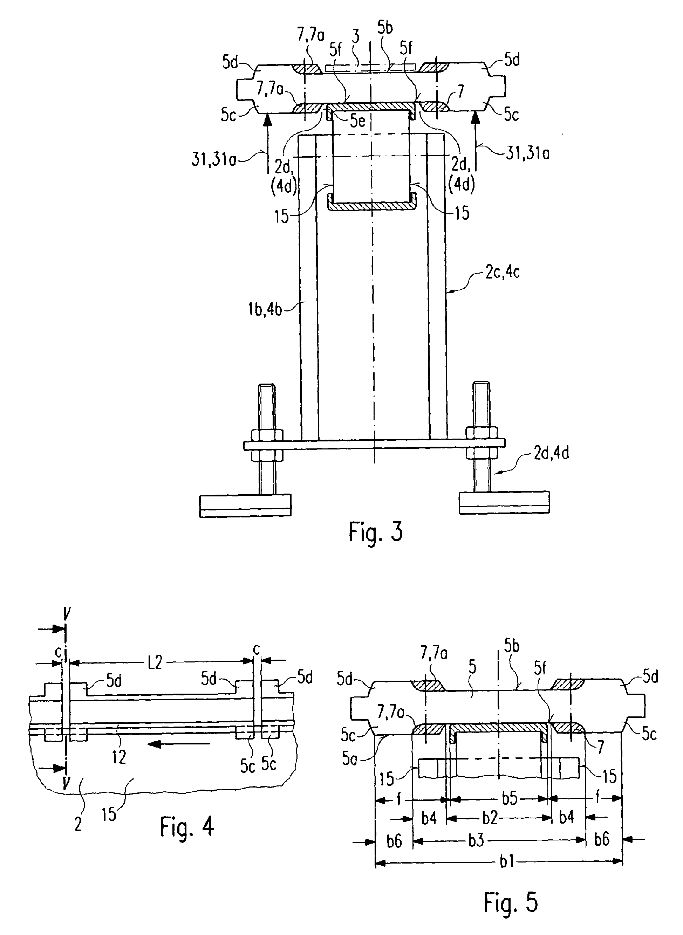

Von den Formlingen 3, die sich jeweils auf einem Formlingsträger 5 befinden und von diesem getragen sind, ist bzw. sind aus Vereinfachungsgründen lediglich in Fig. 3 ein Formling 3 vereinfacht dargestellt.

Die Fördereinrichtung beziehungsweise der Förderer 1 oder 2 oder 4 ist dazu eingerichtet, eine Vielzahl Formlingsträger 5 hintereinander liegend auf dem Zuförderer 2, dem Förderer 1 und dem Weiterförderer 4 zu fördern. Die Förderrichtung 6 und die Fördergeschwindigkeit der Förderer 1, 2 und 4 sind vorzugsweise gleich, jedoch nicht zwingend gleich, und deshalb können sie auch unterschiedlich sein. Im Rahmen der Erfindung können die Formlingsträger 5 jeweils mit den Formlingen 3 dem Förderer 1, 2 und 4 in unterschiedlicher Weise zugefördert beziehungsweise weitergefördert werden.

Der Förderer 1 beziehungsweise die Förderer 1, 2, 4 weisen jeweils wenigsten ein Förderelement 1a, 2a, 4a zur Aufnahme und Förderung eines Formlingsträgers 5 auf, der unterseitig stabil auf dem Förderelement 1a, 2a, 4a aufliegt, und der oberseitig eine stabile Auflage des Formlings 3 gewährleistet. Hierzu kann der Formlingsträger 5 oberseitig eine an die Form eines Formlings, zum Beispiel ein Dachziegel, angepasste Form aufweisen, um ein horizontales Verrutschen oder Kippen des Formlings 3 auf dem Formlingsträger 5 zu verhindern. Die Förderelemente 1a, 2a, 4a können jeweils durch ein noch zu beschreibendes Tragband 12 gebildet sein.

Im Rahmen der Erfindung kann es sich bei dem Formlingsträgern 5 um sogenannte U- oder H-Kassetten aus feuerfestem Material handeln, die geeignet sind, die Formlinge 3 auf der Fördereinrichtung durch einen Trocknungs- oder Brennofen vorzugsweise in Tunnelform, zu fördern. Die Formlingsträger 5 können zum Beispiel aus keramischen Material oder einem ähnlichen Material bestehen.

Die Figuren stellen mehrere Aspekte der Erfindung dar. Der Förderer 1 dient mit dem Zu- und Weiterförderer 2, 4 gemäß einem ersten Aspekt der Förderung und Entleerung von Formlingsträgern 5 ohne Formlinge. Der Zuförderer 2 und der Weiterförderer 4 können aber auch ohne den Förderer 1 als übliche Förderer zum Fordern von Formlingsträgern 5 mit Formlingen 3 eingesetzt werden.

Wie es aus Fig. 3 bis 5 deutlich zu entnehmen ist, weisen die Formlingsträger 5 jeweils eine unterseitige erste Standfläche 5a mit einer Breite b1 auf, mit der sie normalerweise aufliegen, z.B. auf einer Palette oder im Trockner oder Brennofen, und sie weisen eine oberseitige Tragfläche 5b auf, auf der der zugehörige und nur in Fig. 3 angedeutete Formling 3 aufliegt und getragen ist. Bei den dargestellten Formlingsträgern 5 in H-Form mit einer in der Draufsicht viereckigen Form weist der Formlingsträger 5 unterseitig vier Füße 5c und oberseitig vier Ansätze 5d in den Eckenbereichen auf. Zwischen den Füßen 5c befindet sich eine untere Ausnehmung 5e mit einer nach oben versetzten zweiten Standfläche 5f, deren maximale, sich quer zur Förderrichtung 6 erstreckende Breite b2 durch die Innenseiten der Füße 5c begrenzt sein kann. Wenn innenseitig von den Füßen 5c noch zu beschreibende Richtelemente 7 am Formlingsträger 5 angeordnet sind, befindet sich die zweite Standfläche 5f zwischen diesen Richtelementen 7, wobei ihre Breite b2 bezüglich der Breite b3 zwischen den Füßen 5c um die Querabmessung b4 der Richtelemente 7 geringer ist, nämlich gleich oder geringer ist als der Abstand zwischen den Füßen 5c. Die Breite b5 des Förderelements 1a; 2a; 4a ist unter Berücksichtigung eines seitlichen Bewegungsspiels gleich oder kleiner als die Breite b2 der zweiten Standfläche 5f, so dass der Formlingsträger 5 mit der Standfläche 5f auf dem Förderelement 1a, 2a, 4a bzw. dem Tragband 12 aufliegt.

Es können auf einer oder auf beiden Seiten wenigstens ein Richtelement 7 vorgesehen sein, dass durch Formschlusswirkung, z.B. durch Anschlagwirkung, mit wenigstens einem Gegenrichtelement zusammenwirkt, dass den Formlingsträger 5 in seiner horizontalen Lage längs oder quer verschieben oder drehen kann, um ihn in eine bestimmte Passstellung zu bringen. Auf beiden Seiten angeordnete Richtelemente 7 verbessern die formschlüssige Wirkung und Positionierung. Das oder die Gegenrichtelemente können z.B. an ortsfesten Teilen des Förderers 2 und/oder 1 und/oder 4 angeordnet sein.

Beim Ausführungsbeispiel beträgt die Breite b4 zwischen dem Förderelement 1a bzw. 2a bzw. 4a und den Füßen 5c oder die Breite b6 der vorzugsweise spiegelbildlich und gleich breit ausgebildeten Füße 5c etwa 1/4 bis 1/10 der Breite b1 der Unterseite des Formlingsträgers 5, vorzugsweise etwa 1/6 bis 1/8 der Breite b1.

Anstelle von vier Füßen 5c können auch zwei seitliche Füße 5c vorgesehen sein, die sich durch seitliche Freiräume 7a längs der Förderrichtung erstrecken, zum Beispiel als Stege.

Wenn die Formlingsträger 5 mit ihren Füßen 5c und Ansätzen 5d bezüglich ihrer horizontalen Mittelebene spiegelbildlich ausgebildet sind, ist es in vorteilhafterweise möglich, sie als Wende-Formlingsträger 5 beidseitig zu benutzen.

Im Rahmen der Erfindung können die Richtelemente 7 auch entfallen, so dass sich die Tragfläche 5b mit ihrer Breite b5 sich bis zu den Füßen 5c erstreckt. Dies führt nicht nur zu einer Vergrößerung der Tragfläche 5f sondern auch zu einer Material- und Gewichtsersparnis der Formlingsträger 5.

Im Förderbetrieb besteht die Gefahr, das sich Abrieb oder Abbröckelungen von den Formlingsträgern 5 oder den Formlingen 3 lösen und auf der Tragfläche 5b des Formlingsträgers 5 liegen bleiben, wo sie eine Auflage des Formlings 3 beeinträchtigen. Um solche Verunreinigungen zu vermeiden, ist in den Förderer 1 eine Entleerungsvorrichtung integriert, die dadurch selbsttätig wirksam ist, dass dem Förderer 1 eine Haltevorrichtung 8 zugeordnet ist, die den Formlingsträger 5 am Förderelement 1a hält, wobei wenigstens das Förderelement 1a um eine sich längs der Förderrichtung 6 erstreckende Schwenkachse 9 soweit schwenkbar ist, dass die Verschmutzung aufgrund der Schwerkraft vom Formlingsträger 5 abfällt. Unterhalb dieser Schwenkstellung ist eine Schmutzaufnahme 11 vorgesehen, zum Beispiel ein Abförderer, mit dem der Schmutz abtransportiert werden kann.

Aus dieser Schwenkstellung kann das Förderelement 1a mit dem Formlingsträger 5 wieder in seine Ausgangsstellung zurückgeschwenkt werden, oder es kann im Sinne einer Drehung auch in die Ausgangsstellung weitergeschwenkt werden. Während des Haltens und der Schwenkbewegung ist die Förderbewegung des Förderers 1 in die Förderrichtung 6 unterbrochen. Die Förderung auf dem Förderer 1 und vorzugsweise auch auf dem Zuförderer 2 und dem Weiterförderer 4 erfolgt schrittweise, wobei die Schrittlänge der Anzahl der hintereinander liegend auf den Förderer 1 geförderten Formlingsträger 5 entspricht. Beim Vorhandensein einer z. B. durch eine Stapel- und Entstapelvorrichtung gebildeten Speichervorrichtung S1, S2 ist es möglich, die Formlingsträger 5 bis zur Speichervorrichtung S1 kontinuierlich zu fördern und hinter dem Förderer 1 nach der Speichervorrichtung S2 wieder kontinuierlich abzufördern. Allein für sich können die Forderer 2, 4 natürlich auch wahlweise schrittweise oder kontinuierlich fördern.

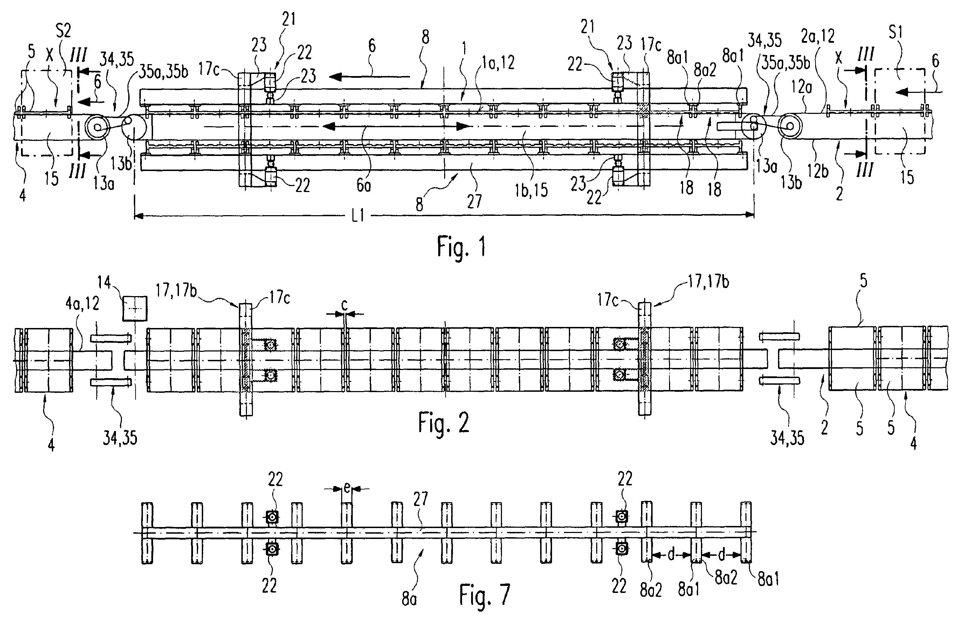

Im Rahmen der Erfindung kann der Förderer 1 dazu eingerichtet sein, nur einen Formlingsträger 5 durch Schwenken zu entleeren, wobei die Länge L1 des Förderers 1 nicht viel größer zu sein braucht als die Länge L2 des Formlingsträgers 5. Beim Ausführungsbeispiel gemäß Fig. 1 bis 4 ist der Förderer 1 für einen Kolonnenbetrieb eingerichtet, das heißt es werden mehrere auf den Förderer 1 hintereinander, und z.B. in einem Abstand c voneinander, angeordnete Formlingsträger 5 gleichzeitig aufgefördert, durch gemeinsames Schwenken entleert und nach diesem Entleerungsvorgang gleichzeitig weitergefördert. Deshalb ist die Länge L1 des Förderers 1 unter Berücksichtigung der Anzahl der hintereinander angeordneten Formlingsträger 5 entsprechend lang ausgebildet. Dies gilt auch für das Förderelement 1a, wobei eine Mehrzahl Förderelemente 1a hintereinander angeordnet sein können oder ein durchgehendes Förderelement 1a vorgesehen sein kann.

Beim Ausführungsbeispiele wird der Förderer 1 und vorzugsweise auch der Zuförderer 2 und der Weiterförderer 4 jeweils durch ein so genanntes Förderband mit einem umlaufenden Tragband 12 gebildet, das mit einem Obertrum 12a und einem Untertrum 12b endlos ausgebildet ist und an den Enden angeordnete und um horizontale Querachsen drehbare Umlenkrollen 13a, 13b umläuft, von denen eine durch einen Antrieb 14 so drehbar ist, dass das Obertrum 12a in die Förderrichtung 6 bewegt wird. Wenigstens das Obertrum 12a ist dabei auf horizontalen Stützflächen gleitbar abgestützt, die an Teilen des Förderers 1 ausgebildet sind.

Der Förderer 1 kann zum Beispiel zwei sich längs der Förderrichtung 6 erstreckende und hochkant angeordnete Seitenwände 15 aufweisen, in deren Endbereichen die Umlenkrollen 13a, 13b drehbar gelagert sind.

Die Haltevorrichtung 8 dreht sich beim Schwenken gemeinsam mit dem Förderer 1 und sie ist an diesen angebaut, wobei ein gemeinsames Schwenklager 17 und ein gemeinsamer Schwenkantrieb 16 vorgesehen sind. Es sind zwei, einen Längsabstand voneinander aufweisende Schwenk- bzw. Drehlager 17a, 17b vorgesehen, die jeweils durch einen Lagermulde gebildet ist, bestehend aus zwei einen Querabstand voneinander aufweisenden Rollenlagern mit Lagerrollen 17d, auf denen ein Lagerring 17c gelagert ist, der durch Querstreben 17e starr mit dem Körper, z.B. mit dem Seitenwänden 15, des Förderers 1 verbunden ist.

Da der Förderer 1 nur so lang ausgebildet zu sein braucht, dass er einen Formlingsträger 5 tragen und halten kann, zum Beispiel etwa der Länge L2 des Formlingsträgers 5 entspricht, werden der Förderer 1 und die Haltevorrichtung 8 im Folgenden so beschrieben, als wenn sie zum Schwenken nur eines Formlingsträgers 5 ausgebildet wären.

Die Haltevorrichtung 8 weist ein Halteelement 8a auf, das über dem Förderelement 1a angeordnet ist und zwischen einer Ausgangstellung, in der es einen Abstand vom auf dem Förderelement 1a befindlichen Formlingsträger 5 aufweist, und einer Haltestellung, in der es den Formlingsträger 5 am Förderelement 1a hält, insbesondere durch Klemmwirkung hin und her bewegbar gelagert und geführt ist. Beim Ausführungsbeispiel sind zwei Halteelemente 8a1, 8a2 vorgesehen, die einen in der Förderer-Längsrichtung 6a gerichteten Abstand d voneinander aufweisen, der kleiner ist als die Länge L2 der vorzugsweise gleich ausgebildeten Formlingsträger 5. Die Halteelement 8a1, 8a2 sind somit in der Lage, den jeweiligen Formlingsträger 5 am hinteren und am vorderen Ende zu halten, so dass der dazwischen befindliche Bereich frei ist zur Aufnahme wenigstens eines Formlings 3.

Außerdem erstrecken sich die Halteelement 8a1, 8a2 in der Querrichtung etwa über die gesamte Breite b1 des Formlingsträgers 5, was eine stabile Halterung ergibt. Zur Hin- und Herbewegung des beziehungsweise der Halteelemente 8a1, 8a2 dient ein in seiner Gesamtheit mit 21 bezeichneter Bewegungsantrieb, der zum Beispiel hydraulisch oder pneumatisch funktioniert und beim Ausführungsbeispiele durch ein oder zwei auf das Halteelement 8a1, 8a2 wirksame Zylinderkolbeneinheiten 22 gebildet ist, deren Kolbenstangen 22a unmittelbar oder mittelbar mit dem Halteelement 8a1, 8a2 verbunden sind. Zur Abstützung des Antriebs 21 beziehungsweise der Zylinderkolbeneinheiten 22 sind Traversen 23 vorgesehen, die zum Beispiel seitlich am zugehörigen Lagerring 17c befestigt und somit am Fördererkörper 1b bzw. den Seitenwangen 15 abgestützt sind.

Zur Verbesserung der Halterung und zur Anpassung an den Formlingsträger 5 sind die Halteelemente 8a1, 8a2 elastisch nachgiebig angeordnet. Dies kann zum Beispiel durch wenigstens ein elastisch nachgiebiges Druckstück 24 erreicht werden, das mit dem zugehörigen Halteelement 8a1, 8a2 jeweils an einer Stelle angeordnet ist, an der es gegen den Formlingsträger 5 drückt. Beim Ausführungsbeispiel sind vier Druckstücke 24 vorgesehen, die im Bereich der oberen Ansätze unterseitig an den Halteelementen 8a1, 8a2 befestigt sind.

Die Halteelemente 8a1, 8a2 können an ihren seitlichen Enden nach unten ragende Positionierelemente 25, z.B. abgewinkelte Stege, aufweisen, die in der Haltestellung zugehörige Flächen des Formlingsträger 5 hier, die Ansätze 5d, übergreifen und daher formschlüssig positionieren, zum Beispiel gegen eine Querbewegung.

Die Halteelemente 8a1, 8a2 sind vorzugsweise durch sich quer erstreckende Leisten gebildet, die durch auf ihnen befestigte Quertraversen 26 stabilisiert sind, die mit den Kolbenstangen 22a verbunden sind.

Bei einem Förderer 1 mit einem oberen und einem unteren Förderelement 1a, die beim vorliegenden Ausführungsbeispiel durch das unterseitig gleitbar abgestützte Obertrumm 12a und das, z.B. oberseitig gleitbar abgestützte, Untertrumm 12b gebildet sind, ist es vorteilhaft, dem Förderer 1 auch eine unterseitige Haltevorrichtung 8 zuzuordnen, die es ermöglicht, zwei Formlingsträger 5 gleichzeitig zu behandeln. Während ein oberseitiger Formlingsträger 5 zum Zwecke seiner Entleerung geschwenkt wird, kann ein unterseitiger Formlingsträger 5 durch Drehen in seine Ausgangsposition geschwenkt werden, wo er im gelösten Zustand oder nach einem Lösen der oberen Haltevorrichtung 8 weiter gefördert werden kann. Vor dem Weiterfördern des oberen Formlingsträgers 5 ist die untere Haltevorrichtung 8 in ihre Lösestellung zu bewegen, in der sie den zugehörigen Formlingsträger 5 trägt, und der obere und entleerte Formlingsträger 5 weiter gefördert werden kann. Diese Ausgestaltung ermöglicht es somit, die Formlingsträger 5 mit einer halbierten Schwenkbewegung leistungsfähig zu entleeren. Bei der Hochschwenkbewegung kann die untere Haltevorrichtung 8 in ihrer gelösten Position verbleiben, wobei die Positionierelemente 25 verhindern, dass der Formlingsträger 5 in die Umfangsrichtung verrutscht und somit im oberen Bereich auf das Förderelement 1a fallen kann, um weiter gefördert zu werden.

Um mehrere hintereinander angeordnete Formlingsträger 5 gleichzeitig am Förderer 1 zu halten bedarf es einer länglichen Ausbildung der Haltevorrichtung 8, wobei deren Halteteile länglich ausgebildet sein können oder mehrere, der Mehrzahl der Formlingsträger 5 zugeordnete Halteteile hintereinander liegend angeordnet sein können. Beim vorliegenden Ausführungsbeispiel weisen die Haltevorrichtungen 8 eine sich über alle gleichzeitig zu haltenden Formlingsträger 5 erstreckende Haltestange 27 auf, von der sich seitlich die Quertraversen 23 erstrecken, unter denen die sich quer, vorzugsweise durchgehend, erstreckenden Halteelemente 8a1, 8a2 befinden und befestigt sind. Letztere sind vorzugsweise in der Längsrichtung 6a, das heißt in ihrer Breite e, größer bemessen, als ein Längsabstand c oder eine Fuge zwischen den Formlingsträgern 5. Dies gilt auch für die Druckstücke 24. Deshalb sind die Halteelemente 8a1, 8a2 beziehungsweise die Druckstücke 24 geeignet, die einander zugewandten Längsenden von jeweils zwei Formlingsträgern 5 zu halten, so dass die Anzahl der Halteelemente 8a1, 8a2 beziehungsweise Druckstücke 24 wesentlich verringert ist.

Die andere Haltevorrichtung 8 ist bezüglich der zum Beispiel durch die Schwenkachse 9 gebildete Längsachse des Förderers 1 spiegelbildlich angeordnet und ausgebildet, so dass es abgesehen von der vorbeschriebenen Öffnungs- und Schließsteuerung der Haltevorrichtungen 8 aus Vereinfachungsgründen keiner besonderen Beschreibung bedarf.

Wie bereits der Förderer 1 weist auch der Zuförderer 2 und der Weiterförderer 4 ein Gestell 1c, 2c, 4c auf, vorzugsweise mit höhenverstellbaren Füßen 1d, 2d, 4d.

Der beidseitige seitliche Überstand f, mit dem der Formlingsträger 5 das Förderelement 2a, 4a seitlich überragt, ermöglich es, in diesen Bereichen Vorrichtungen 31 anzuordnen, mit denen auf den Formlingsträger 5 eingewirkt werden kann, zum Beispiel mit auf beiden Seiten im Bereich des Überstands f angeordneten Vorrichtungsteilen 31 a, die als aufwärtsgerichtete Pfeile vereinfacht dargestellt sind und zum Beispiel von unten gegen den Formlingsträger 5 wirksam sein können. Dabei sind diese Vorrichtungsteile 31 a raumgünstig unter dem durch den seitlichen Überstand f vorgegebenen seitlichen Freiraum 1d, 2d, 4d am Fördererkörper 1b, 2b, 4b angeordnet. Dabei können die Vorrichtungsteile 31a am Fördererkörper 2b, 4b abgestützt sein, zum Beispiel durch eine seitliche Befestigung.

Bei der Vorrichtung 31 kann es sich zum Beispiel um eine Hebe- und/oder Senkvorrichtung zum Heben wahlweise Heben und/oder Senken des Formlingsträgers 5 handeln. Die Hebevorrichtung kann zum Beispiel Teil einer Stapel- und/oder Entstapelvorrichtung 32 sein, die eine Speichervorrichtung S1, S2 zum Speichern von Formlingsträgern 5 zugeordnet sein kann.

Wenn die Förderer 2, 1 und 4 durch Förderbänder mit endseitigen Umlenkungen des Tragbandes 12 gebildet sind, bedarf es einer besonderen Überleitungsvorrichtung 34 zwischen den einander zugewandten Fördererenden, die die Formlingsträger 5 in gleichbleibender Höhenlage überleitet. Beim Ausführungsbeispiel sind die Überleitungsvorrichtungen 34 durch Zwischenförderer 35 gebildet jeweils mit zwei endlosen Zwischentragbändern 35b, die beiderseits neben den Enden des Förderers 2 und des Förderers 1 beziehungsweise diesem und dem Weiterförderer 4 angeordnet und entsprechend der Fördergeschwindigkeit durch einen nicht dargestellten Antrieb angetrieben sind. Bei diesen Zwischenförderern 35 bilden die Zwischentragbänder 35b jeweils ein oder mehrere hintereinander angeordnete Förderelemente 35a.

Auch die Überleitungsvorrichtung 34 beziehungsweise die Zwischenförderer 35 können raumgünstig seitlich neben dem jeweiligen Förderer 2, 1, 4 angeordnet sein und zwar unter dem seitlichen Überstand f des jeweiligen Formlingsträgers 5. Dabei sind die Zwischenförderer 35 so hoch angeordnet, dass ihre Förderelemente 35a den jeweiligen Formlingsträger 5 in dessen Förderhöhe tragen und fördern können. Wenn die Formlingsträger 5 Füße 5c aufweisen, sind die Zwischenförderer 35 mit ihren Förderelementen 35a beziehungsweise Zwischentragbändern 35b bezüglich den Förderelementen 1a, 2a beziehungsweise 4a um den Höhenversatz zwischen der ersten Standfläche 5a und der zweiten Standfläche 5f tiefer angeordnet, so dass die Formlingsträger 5 in gleicher Höhenlage zwischengefördert werden können, wobei sie mit ihren Füßen 5c auf den Zwischenförderern 35 stehen. Dies gilt in entsprechender Umkehrung der Funktionsfolge auch für die zwischen dem Förderer 1 und den Weiterförderer 4 angeordneten Überleitungsvorrichtung 34 beziehungsweise Zwischenförderer 35. Diese können zum Beispiel mit einem nicht dargestellten Tragegestell ortfest abgestützt sein.

Nachfolgend wird zunächst die Funktion des Förderers 1 mit dem in dessen Bereich stattfindenden Entleerungs-Verfahren des beziehungsweise der Formlingsträger 5 beschrieben.

Ein oder mehrere hintereinander angeordnete Formlingsträger 5 werden dem Förderer 1 durch Fördern übergeben, wobei die Förderbewegung des Förderers 1 abgestellt wird, wenn der oder die Formlingsträger 5 sich an der jeweils zugehörigen Aufnahmestelle 18 befinden. Dann führt die obere Haltevorrichtung 8 ihre Haltefunktion aus, wobei der beziehungsweise die Formlingsträger 5 durch das jeweils zugehörige Halteelement 8a am zugehörigen Förderelement 1a gehalten wird, zum Beispiel durch Drücken gegen das Förderelement 1a. Nach dieser Halterung wird der Förderer 1 in seine Entleerungsstellung geschwenkt und dann wieder zurückgeschwenkt oder gedreht, wobei in der Entleerungsstellung oder beim Drehen um die Schwenkachse 9 in den Formlingsträgern 5 vorhandene Verunreinigungen selbsttätig herausfallen. In der dann erreichten oberen Ausgangsstellung wird die Haltevorrichtung 8 gelöst und die Förderung eingeschaltet, wonach der beziehungsweise die Formlingsträger 5 weitergefördert wird beziehungsweise werden.

Beim Vorhandensein von einer oberen und einer unteren Haltevorrichtung 8 kann die Reinigung- bzw. Entleerungsleistung vergrößert beziehungsweise annähert verdoppelt werden, weil nach einer nach unten gerichteten Schwenkung beziehungsweise Drehung der beziehungsweise die im vorherigen Schwenk- beziehungsweise Drehschritt entleerte Formlingsträger 5 bereits weitergefördert und danach ein oder mehrere zu reinigende Formlingsträger 5 dem Förderer 1 übergeben werden können.

Im Bereich des Förderers 2 oder 4 oder auch oder nur im Bereich des Förderers 1 werden die Formlingsträger 5 gemäß folgendem Verfahren gefördert.

Die Formlingsträger 5 werden von den Förderelementen 1a, 2a, 4a in ihrem mittleren Unterseitenbereich getragen, wobei die Breite b5 der Förderelemente 1a, 2a, 4a bzw. deren Oberseite gleich oder kleiner ist als der Unterseitenbereich, der beim Ausführungsbeispiel durch die zweite Standfläche 5f gebildet ist. Hierdurch ergeben sich im Bereich der beiderseitigen Überstände f unterhalb der Formlingsträger 5 Freiräume 1d, 2d, 4d, die für eine andere Einwirkung oder Manipulation auf die Formlingsträger 5 benutzt werden können. Zum Beispiel können die Formlingsträger 5 im Bereich dieser Freiräume 1d, 2d, 4d durch eine Hebevorrichtung und/oder Senkvorrichtung gehoben und/oder gesenkt werden, was einer Speicherung und Wiederzuführung der Formlingsträger 5 z.B. durch Stapelung und/oder Entstapelung ermöglicht. Für diese zusätzliche Einwirkung oder Manipulation stehen die gesamten Fußflächen 5g der Füße 5c zur Verfügung.

Beim vorliegenden Ausführungsbeispiel werden die Formlingsträger 5 durch Auflage mit ihren mittleren Unterseitenbereichen auf den Förderelementen 2a, 1a, 4a durch den Förderer 1 und vorzugsweise auch durch den Weiterförderer 4 weiter gefördert.

Dagegen werden die Formlingsträger 5 in den Übergangsbereichen zwischen den Förderern 2, 1 und 4 unter den Füßen 5c getragen.

Eine durchgehenden Förderung ist besonders vorteilhaft, wobei im Übergangsbereich zwischen den Förderern 2, 1, 4 die Formlingsträger 5 durch ein Tragen im Bereich ihrer seitlichen Überstände f gefördert werden können.

## Patentansprüche

1. Fördersystem bestehend aus wenigstens einem Formlingsträger (5) und mehneren Förderern (1,2,4), wobei jeder förderer (1) wenigstens ein Förderelement (1a, 2a, 4a) zur Förderung des Formulingträgers (5) aufweist,
wobei die Formlingsträger (5) anchren unterseiten seitlich angeordnete Füße (5a) und dazwischen einen nach oben versetzten Unterseitenbereich aufweisen, bei dem die Formlingsträger (5) auf die Förderelemente (1a, 2a, 4a) übergeben und von diesen beim Fördern getragen werden, und wobei
die Formlingsträger (5) von den Förderelementen (1a; 2a; 4a) in ihrem mittleren Unterseitenbereich getragen werden, wobei die Breite (b5) der Oberseite der Förderelemente (1a, 2a, 4a) gleich oder kleiner ist als der Unterseitenbereich,
**dadurch gekennzeichnet,**
**dass** zwischen zwei Förderern (2, 1, 4) ein Zwischenförderer (35) angeordnet ist und
die Formlingsträger (5) vom Zwischenförderer (35) unter den Füßen (5c) getragen werden.

2. Fördersystem nach Anspruch 1,
**dadurch gekennzeichnet,**
**dass** der Formlingsträger (5) innenseitig von den Füßen (5c) jeweils wenigstens ein Richtelement (7) aufweist und die Breite (b5) der Oberseite des Förderelements (1a, 2a, 4a) sich bis zu dem einseitigen oder den beidseitigen Richtelementen (7)erstreckt oder einen Abstand von dem oder den Richtelementen (7) aufweist.

3. Fördersystem nach Anspruch 1, **dadurch gekennzeichnet,**
**dass** an wenigstens einem Förderer (1) eine Haltevorrichtung (8) zum Halten des Formlingsträgers (5) am Förderelement (la) angeordnet ist und der Förderer (1) mit der Haltevorrichtung (8) um eine sich längs dem Förderer (1) erstreckende Schwenkachse (9) in eine Entleerungsstellung für den Formlingstäger schwenkbar angeordnet ist.

4. Fördersystem nach anspruch 3,
**dadurch gekennzeichnet,**
**dass** der Förderer (1) aus seiner Schwenkstellung rückschwenkbar ist und rückgeschwenkt wird oder über die Entleerungsstellung hinaus in seine Ausgangsstellung drehbar ist und gedreht wird.

5. Fördersystem nach Anspruch 3, **dadurch gekennzeichnet,**
**dass** wenigstens eine Haltevorrichtung (8) zum gleichzeitigen Halten mehrerer auf Förderelementen (1a) angeordneter Formlingsträger (5) länglich ausgebildet ist und mit wenigstens zwei einen Längsabstand voneinander aufweisenden Halteelementen (8a1, 8a2) einen Formlingsträger (5) halten,
wobei vorzugsweiße die Halteelemente (8a1, 8a2) die einander zugewandten Enden von zwei hintereinander angeordneten Formlingsträgern (5) halten.

6. Fördersystem nach einem der vorherigen Ansprüche, **dadurch gekennzeichnet, dass** der Förderer (1) wenigstens einen ihn umgebenden Lagerring (17c) aufweist, der in einer Lagermulde drehbar gelagert ist, die z.B. durch zwei einen Querabstand voneinander aufweisende außermittige Lagerrollen (17d) gebildet ist.

7. Fördersystem nach einem der vorherigen Ansprüche,
**dadurch gekennzeichnet,**
**dass** der Förderer (1) ein Bandförderer mit einem umlaufenden Tragband (12) ist.

8. Verfahren zum Fördern von Formlingsträgem (5) auf Förderern (1,2,4) mit Förderelementen (1a, 2a, 4a) wobei die Formlingsträger (5) seitlich angeordnete Füße (5a) und dazwischen einen nach oben versetzten Unterseitenbereich aufweisen, bei dem die Formlingsträger (5) auf die Förderelemente (1a, 2a, 4a) übergeben und von diesen beim Fördern getragen werden, und wobei die Formlingsträger (5) von den Förderelementen (1a; 2a; 4a) in ihrem mittleren Unterseitenbereich getragen werden, wobei die Breite (b5) der Oberseite der Förderelemente (1a, 2a, 4a) gleich oder kleiner ist als der Unterseitenbereich,
**dadurch gekennzeichnet,**
**dass** zwischen zwei Förderern (2, 1, 4) ein Zwischenförderer (35) angeordnet ist und die Formlingsträger (5) vom Zwischenförderer (35) unter den Füßen (5c) getragen werden.

9. Verfahren nach Anspruch 8, **dadurch gekennzeichnet,**
**dass** die Formlingsträger (5) innenseitig von einem oder beiden Füßen (5c) wenigstens ein Richtelement (7) aufweisen und die Formlingsträger (5) von den Förderelementen (1a, 2a, 4a) im Unterseitenbereich innenseitig von dem oder den Richtelementen (7) getragen werden.

## Claims

1. A conveyor system comprising at least one product carrier (5) and several conveyors (1, 2, 4), wherein each conveyor (1) provides at least one conveyor element (1a, 2a, 4a) for conveying the product carrier (5),
wherein the product carriers (5) provide laterally arranged feet (5a) on their undersides and between these an upwardly offset underside region, with which the product carriers (5) are transferred to the conveyor elements (1a, 2a, 4a) and carried by the latter during the conveying, and wherein
the product carriers (5) are carried by the conveyor elements (1a; 2a; 4a) with their central underside region, wherein the width (b5) of the upper side of the conveyor elements (1a, 2a, 4a) is equal to or smaller than the underside region,
**characterised in that**
an intermediate conveyor (35) is arranged between two conveyors (2, 1, 4), and the product carriers (5) are carried by the intermediate conveyor (35) under the feet (5c).

2. The conveyor system according to claim 1,
**characterised in that**
the product carrier (5) provides at least one guide element (7) in each case on the inside of the feet (5c), and the width (b5) of the upper side of the conveyor element (1a, 2a, 4a) extends up to the guide elements (7) on one side or both sides or provides a spacing distance from the guide element or elements (7).

3. The conveyor system according to claim 1,
**characterised in that**
a holding device (8) for holding the product carrier (5) is arranged on the conveyor element (1a) of at least one conveyor (1), and the conveyor (1) with the holding device (8) can be rotated about a rotational axis (9) extending along the conveyor (1) into an emptying position for the product carrier (5).

4. The conveyor system according to claim 3,
**characterised in that**
the conveyor (1) can be pivoted back and is pivoted back from its pivoted position or can be rotated and is rotated beyond the emptying position into its starting position.

5. The conveyor system according to claim 3,
**characterised in that**
at least one holding device (8) for the simultaneous holding of several product carriers (5) arranged on conveyor elements (1a) is embodied in an elongated manner and holds a product carrier (5) with at least two holding elements (8a1, 8a2) providing a longitudinal spacing distance from one another, wherein the holding elements (8a1, 8a2) preferably hold the mutually facing ends of two product carriers (5) arranged one behind the other.

6. The conveyor system according to any one of the preceding claims,
**characterised in that**
the conveyor (1) provides at least one annular bearing (17c) surrounding it, which is mounted in a rotatable manner in a bearing trough, which is formed, for example, by two eccentric bearing rollers (17d) providing a transverse distance from one another.

7. The conveyor system according to any one of the preceding claims,
**characterised in that**
the conveyor (1) is a conveyor belt with a circulating carrying belt (12).

8. A method for conveying product carriers (5) on conveyors (1, 2, 4) with conveyor elements (1a, 2a, 4a), wherein the product carriers (5) provide laterally arranged feet (5a), and between them provide an upwardly offset underside region, with which the product carriers (5) are transferred to the conveyor elements (1a, 2a, 4a) and carried by these during the conveying, and wherein the product carriers (5) are carried in their central underside region by the conveyor elements (1a; 2a; 4a), wherein the width (b5) of the upper side of the conveyor elements (1a, 2a, 4a) is equal to or smaller than the underside region,
**characterised in that**
an intermediate conveyor (35) is arranged between two conveyors (2, 1, 4), and the product carriers (5) are carried by the intermediate conveyor (35) under the feet (5c).

9. The method according to claim 8,
**characterised in that**
the product carriers (5) provide at least one guide element (7) on the inside of one or both feet (5c), and the product carriers (5) are carried by the conveyor elements (1a,2a,4a) in the underside region on the inside of the guide element or elements (7).

## Revendications

1. Système de transport constitué d'au moins un support de pièces (5) et de plusieurs convoyeurs (1, 2, 4), où chaque convoyeur (1) présente au moins un élément de convoyage (1a, 2a, 4a) pour le convoyage du support de pièces (5), où les supports de pièces (5) présentent à leurs côtés inférieurs des pieds (5a) disposés latéralement et entre ceux-ci une zone de côté inférieur décalée vers le haut, où les supports de pièces (5) sont transférés aux éléments de convoyage (1a, 2a, 4a) et sont supportés par ceux-ci lors du convoyage, et où
les supports de pièces (5) sont supportés par les éléments de convoyage (1a, 2a, 4a) dans leurs zones de côté inférieur médiane, où la largeur (b5) du côté supérieur des éléments de convoyage (1a, 2a, 4a) est identique ou plus petite que la zone du côté inférieur,
**caractérisé en ce qu'**est disposé entre deux convoyeurs (2, 1, 4) un convoyeur intermédiaire (35), et que les supports de pièces (5) sont supportés par le convoyeur intermédiaire (35) sous les pieds (5c).

2. Système de transport selon la revendication 1, **caractérisé en ce que** le support de pièces (5) présente au côté intérieur des pieds (5c) respectivement au moins un élément d'ajustement (7), et que la largeur (b5) du côté supérieur de l'élément de convoyage (1a, 2a, 4a) s'étend jusqu'aux éléments d'ajustement (7) sur un côté ou les deux côtés et présente un écart relativement au ou aux éléments d'ajustement (7).

3. Système de transport selon la revendication 1, **caractérisé en ce qu'**est disposé à au moins un convoyeur (1) un dispositif de retenue (8) pour la retenue du support de pièces (5) à l'élément de convoyage (1a), et que le convoyeur (1) avec le dispositif de retenue (8) est disposé d'une manière pivotante autour d'un axe de pivotement (9) s'étendant le long du convoyeur (1) dans une position de vidage du support de pièces (5).

4. Système de transport selon la revendication 3, **caractérisé en ce que** le convoyeur (1) peut être ramené par pivotement de sa position de pivotement et est ramené par pivotement ou peut être tourné et est tourné au-delà de la position de vidage dans sa position de départ.

5. Système de transport selon la revendication 3, **caractérisé en ce qu'**au moins un dispositif de retenue (8) est réalisé en longueur pour la retenue simultanée de plusieurs supports de pièces (5) disposés sur les éléments de convoyage (1a) et retiennent avec au moins deux éléments de retenue espacés longitudinalement l'un de l'autre (8a1, 8a2) un support de pièces (5), où de préférence les éléments de retenue (8a1, 8a2) tiennent les extrémités orientées l'une vers l'autre de deux supports de pièces (5) disposés l'un derrière l'autre.

6. Système de transport selon l'une des revendications précédentes, **caractérisé en ce que** le convoyeur (1) présente au moins une bague de roulement (17c) entourant celui-ci, qui est logée d'une manière tournante dans un creux de roulement qui est formé par deux galets de roulement (17d) excentrés espacés transversalement l'un de l'autre.

7. Système de transport selon l'une des revendications précédentes, **caractérisé en ce que** le convoyeur (1) est un convoyeur à bande avec une bande de support circulante (12).

8. Procédé de transport de supports de pièces (5) sur un convoyeur (1, 2, 4) avec des éléments de convoyage (1a, 2a, 4a), où les supports de pièces (5) présentent des pieds (5a) disposés latéralement et entre ceux-ci une zone de côté inférieur décalée vers le haut, dans laquelle les supports de pièces (5) sont transférés aux éléments de transport (1a, 2a, 4a) et sont supportés par ceux-ci lors du transport, et où les supports de pièces (5) sont supportés par les éléments de convoyage (1a; 2a; 4a) dans leur zone de côté inférieur médiane, où la largeur (b5) du côté supérieur des éléments de convoyage (1a, 2a, 4a) est égale ou inférieure à celle de la zone de côté inférieur, **caractérisé en ce qu'**est disposé entre deux convoyeurs (2, 1, 4) un convoyeur intermédiaire (35), et les supports de pièces (5) sont supportés par le convoyeur intermédiaire (35) sous les pieds (5c).

9. Procédé selon la revendication 8, **caractérisé en ce que** le supports de pièces (5) présentent au côté intérieur d'un ou des deux pieds (5c) au moins un élément d'ajustement (7), et que les supports de pièces (5) sont supportés par les éléments de convoyage (1a, 2a, 4a) dans la zone de côté inférieur au côté intérieur par le ou les éléments d'ajustement (7).
